# FASCICULE DE BREVET EUROPEEN

(11) **EP 2 591 587 B1**
(45) Date de publication et mention de la délivrance du brevet: **15.08.2018**
(21) Numéro de dépôt: 11741475.5
(22) Date de dépôt: 27.06.2011
(51) Int. Cl.: H04L 29/08

(54) **ACCÈS CONFIDENTIEL OU PROTÉGÉ À UN RÉSEAU DE NOEUDS RÉPARTIS SUR UNE ARCHITECTURE DE COMMUNICATION À L'AIDE D'UN SERVEUR DE TOPOLOQIE**
VERTRAULICHER ODER GESCHÜTZTER ZUGANG ZU EINEM ÜBER EINE KOMMUNIKATIONSARCHITEKTUR VERTEILTEN KNOTENNETZWERK MIT HILFE EINES TOPOLOGIESERVERS
CONFIDENTIAL OR PROTECTED ACCESS TO A NETWORK OF NODES DISTRIBUTED OVER A COMMUNICATION ARCHITECTURE WITH THE AID OF A TOPOLOGY SERVER

(30) Priorité: 08.07.2010 FR 1055576
(43) Date de publication de la demande: 15.05.2013
(73) Titulaire: Alcatel Lucent, 91620 Nozay (FR)
(72) Inventeur: RANDRIAMASY, Claire, Sabine, F-91620 Nozay (FR)
(74) Mandataire: Browne, Robin Forsythe
(86) Numéro de dépôt international: PCT/FR2011/051483
(87) Numéro de publication internationale: WO 2012/004492

(56) Documents cités:
- US-A1- 2002 135 610
- US-A1- 2005 125 492
- US-A1- 2006 245 431
- US-A1- 2008 189 256
- SEEDORF NEC E BURGER NEUSTAR INC J: "Application-Layer Traffic Optimization (ALTO) Problem Statement; rfc5693.txt", APPLICATION-LAYER TRAFFIC OPTIMIZATION (ALTO) PROBLEM STATEMENT; RFC5693.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 octobre 2009 (2009-10-01), XP015065705,

## Description

La présente invention est relative aux applications réparties sur un réseau de noeuds déployés sur une architecture de communication.

Ces applications comprennent les applications dites « pair-à-pair » (ou p2p selon la terminologie en langue anglaise « peer-to-peer ») mais également les réseaux de type CDN (« Content Delivery Network ») qui sont constitués d'ordinateurs reliés en réseau à travers Internet, et qui coopèrent afin de mettre à disposition du contenu ou des données (généralement du contenu multimédia volumineux) à des utilisateurs.

Ce type de réseau est constitué :
- de serveurs d'origine, où les contenus sont "injectés" dans le CDN pour y être répliqués ;
- de noeuds de stockage (permanent ou non) répartis géographiquement en "bordure" d'Internet, où les contenus sont répliqués ;
- d'un mécanisme de routage sémantique (« name-based routing ») permettant à une requête utilisateur sur un contenu d'être servie par le noeud le "plus proche", au sens sémantique

Ces applications réparties comprennent également les « grilles informatiques », plus communément appelées GRID qui sont des infrastructures virtuelles constituées d'un ensemble de ressources informatiques potentiellement partagées, distribuées, hétérogènes, délocalisées et autonomes.

D'autres types d'applications peuvent également être inclues dans le cadre de l'invention.

Ces applications réparties partagent la même caractéristique de mettre en relation des noeuds applicatifs (« overlay ») sous forme de réseau, en se basant sur leur contenu ou leurs caractéristiques sémantiques, mais sans se préoccuper de la caractéristique topologique de l'architecture de communication sous-jacente.

Cette indépendance entre la structure logique et l'architecture matérielle présente des avantages mais également au moins un inconvénient majeur puisque le déploiement du réseau de noeuds applicatifs ne prend pas en compte la topologie de cette architecture de communication.

Deux noeuds peuvent en effet être voisins dans le réseau de noeuds selon des critères uniquement applicatif et sémantiques, mais être déployés sur des équipements de communication distants. La situation où un noeud est localisé dans un continent et son voisin dans un autre n'est pas rare.

Il en résulte une augmentation des délais de transmission de bout en bout et une dégradation des performances générales du réseau de noeuds, mais également par l'utilisation de nombreuses connexions distantes, un engorgement du réseau internet dans son ensemble.

Un autre problème est que cela nécessite que des opérateurs laissent transiter dans leurs réseaux du trafic non facturé. Cela oblige certains opérateurs à sur-dimensionner leur réseau ou à dégrader la qualité de service affectée à ce trafic.

Le document de l'art antérieur US2005/0125492 décrit un système intégré de gestion des éléments d'un réseau, collectant des informations topologiques et les stockant avec des fichiers de configuration. Des propositions ont été faites pour améliorer la situation. Une de ces propositions est le service « ALTO » (Application-Layer Traffic Optimization) qui fait l'objet d'un groupe de standardisation au sein de l'IETF (Internet Engineering Task Force).

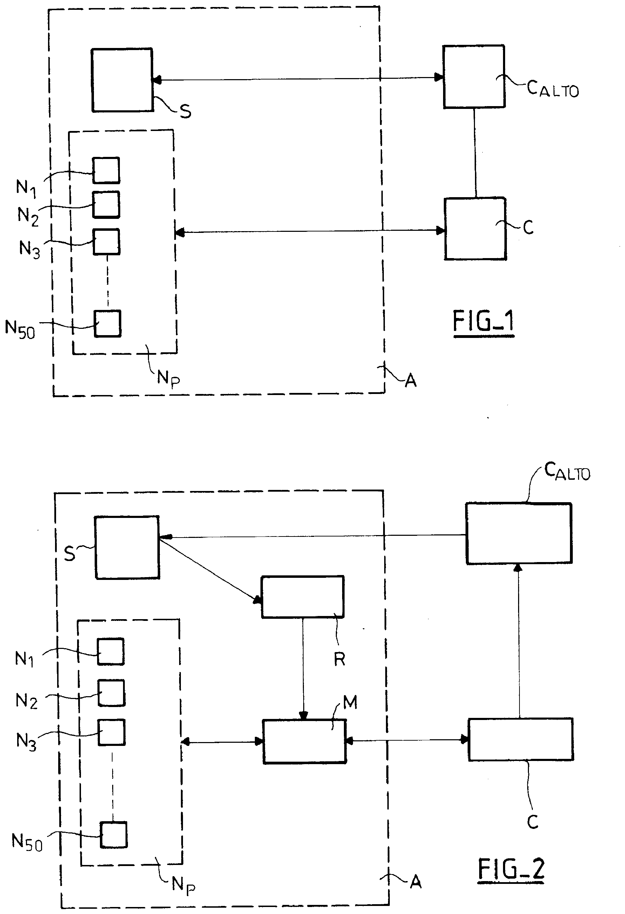

Le principe de cette proposition est illustré par la figure 1 et repose sur un serveur S qui dispose d'une vue partielle de l'architecture de communication A. Ce serveur conforme au standard ALTO S permet aux clients ALTO C_{ALTO} d'obtenir des informations sur un ensemble de noeuds N1, N2, N3... N50 du réseau de noeuds Nₚ prenant en compte cette vue partielle. Cette vue est partielle au sens où elle ne couvre qu'une région de l'architecture de communication et elle est centrée sur l'opérateur d'un système autonome donné dont elle représente la vue du réseau Internet.

Ainsi qu'expliqué au paragraphe 2.2 du document draft-ietf-alto-protocol-04.txt , une région peut être un système autonome, un réseau géré par un fournisseur d'accès à l'internet (ISP pour Internet Service Provider), ou bien un sous-réseau ou un ensemble de tels réseaux.

Le serveur ALTO S peut proposer aux clients ALTO différents services. Il peut notamment fournir une cartographie de sa vue du réseau ou bien fournir un ordonnancement d'un ensemble de noeuds dont les identifiants lui sont transmis par le client ALTO auquel est connecté le client applicatif C.

Ces informations fournies par le serveur S prennent en compte la topologie du réseau et peuvent donc permettre aux clients C de mettre en place un réseau de noeuds (notamment un réseau pair-à-pair) tirant profit de cette connaissance. Ainsi, des réseaux optimaux pour le mécanisme de transmission/livraison peuvent être mis en place.

Toutefois, cette proposition souffre d'un inconvénient important puisqu'elle oblige les fournisseurs d'accès et les opérateurs à mettre à disposition des clients la connaissance de leurs architectures de communication. Il est possible pour des entités mal intentionnées de placer des requêtes vers les serveurs ALTO de façon à construire une vue complète des architectures de communication des opérateurs. Le document RFC 5693 «Application-Layer Traffic Optimization (ALTO) Problem Statement» souligne ce problème dans son paragraphe 5.5 «Topology Hiding ».

Ceux-ci ont bien sûr la possibilité de ne mettre à disposition au sein des serveurs ALTO que des vues tronquées, mais le document draft-ietf-alto-protocol-04.txt met en garde contre ce comportement dans le paragraphe 11.1 : le risque est alors que le serveur ALTO ne soit plus en en mesure de jouer son rôle et que le déploiement du réseau de noeuds ne soit plus optimal.

Un besoin existe donc pour améliorer la situation.

Le but de l'invention est de bénéficier des avantages des serveurs ALTO tout en permettant aux opérateurs et fournisseurs d'accès à l'internet de ne pas divulguer la topologie ou d'autres informations sensibles relatives à leurs architectures de communication.

Pour ce faire, l'invention a pour objet un système d'accès à une application répartie sur un réseau de noeuds déployé sur une architecture de communication, par un client connecté à cette architecture.

Il comporte
- un serveur conforme aux recommandations du groupe de normalisation ALTO de l'IETF, disposant de moyens pour fournir sur requête du client des informations sur un ensemble de noeuds de ce réseau prenant en compte la topologie du réseau au sein de l'architecture de communication,
- au moins un dispositif de relai apte à recevoir ces informations et
- au moins un dispositif de médiation adapté à l'établissement de communications entre le client et au moins certains des noeuds de cet ensemble, ces noeuds étant déterminés à partir des informations fournies par le ou les dispositifs de relai.

Cette communication peut être établie en deux tronçons : d'un coté entre lui-même et le client applicatif ; de l'autre coté entre lui-même et le ou les noeuds de l'ensemble.

Selon une mise en oeuvre de l'invention, ce système d'accès peut comporter au moins un équipement de traitement implémentant un de ces dispositifs de relai et un de ces dispositifs de médiation.

Le serveur peut être conforme aux spécifications ALTO. Le client peut transmettre la requête au serveur ALTO par l'intermédiaire d'un client conforme aux spécifications ALTO.

Les informations peuvent former une liste ordonnée d'identifiants de noeuds. Elles peuvent aussi être constituées d'associations entre identifiants de noeuds et coût(s).

Ainsi, par l'utilisation d'un dispositif de médiation et par l'envoi des informations à un dispositif de relai qui communique avec ce dispositif de médiation, les opérateurs et fournisseurs d'accès à l'Internet peuvent mettre à disposition les données cartographiques de leurs architectures dans les serveurs ALTO en ayant l'assurance que les clients eux-mêmes ne peuvent y accéder.

L'invention a également pour objet un procédé d'accès à une application répartie sur un réseau de noeuds déployé sur une architecture de communication, par un client (applicatif) connecté à l'architecture, comportant une étape de transmission par le client d'une requête à un serveur qui fournit en réponse des informations sur un ensemble de noeuds du réseau prenant en compte sa topologie au sein de l'architecture de communication.

Les informations sont transmises à au moins un dispositif de relai, et le procédé comporte en outre une étape d'établissement de communications entre le client et au moins certains des noeuds de cet ensemble, ces noeuds étant déterminés à partir des informations fournies par l'au moins un dispositif de relai.

La communication peut être établie en deux tronçons : d'abord entre lui-même et le client applicatif C (dont il recueille les spécifications telles que le nombre de noeuds désirés) et à qui il transmettra les données reçus des noeuds sélectionnés, puis entre lui-même et les noeuds sélectionnés dont il recevra les données.

L'invention a également pour objet une application logicielle comportant des moyens pour réaliser les étapes de ce procédé, lorsqu'elle est mise en oeuvre par un ou plusieurs équipements de traitement de données.

L'invention, ses avantages et ses caractéristiques apparaîtront de façon plus claire dans la description de mises en oeuvre qui va suivre en liaison avec les figures annexées.
La figure 1, déjà commentée, illustre une architecture de communication mettant en oeuvre le protocole ALTO.
La figure 2 schématise une architecture de communication mettant en oeuvre l'invention.
La figure 3 représente une mise en oeuvre de l'invention.

La vue représentée par la figure 2 est une vue fonctionnelle schématique. Elle a été volontairement simplifiée pour rendre plus clairs l'exposé des principes de l'invention.

Elle représente une architecture de communication A à laquelle est connectée un client C. Ce client C est un client applicatif qui souhaite utiliser une application répartie sur des noeuds N1, N2, N3... N50 d'un réseau de noeuds Np.

Comme évoqué précédemment, ces noeuds présentent des caractéristiques différentes, notamment vis à vis de la topologie du réseau. Ainsi, ils peuvent être localisés sur des équipements reliés à l'architecture de communication A par des moyens d'accès différents (Ethernet™, Wifi, 3G, LTE...), ayant chacun des caractéristiques différentes en terme de bande-passante, disponibilité etc. mais ils peuvent aussi être situés dans des réseaux d'opérateurs différents, et dans des zones géographiques très différentes.

Le client applicatif C peut être localisé sur un terminal de télécommunication. Ce peut être un téléphone mobile, un ordinateur portable, un assistant personnel numérique ou tout autre dispositif permettant à un utilisateur de se connecter à des applications situées sur une architecture de communication telle Internet. Les applications peuvent être des applications de jeu en réseau, de partage de fichiers, d'accès à des flux multimédia, notamment vidéo, de calcul partagé, etc.

De façon connue en soi, le client applicatif C peut connaître une liste de noeuds du réseau Np. Différentes techniques existent pour ce faire, comme par exemple l'utilisation d'un serveur centralisé proposant un point d'accès à ce réseau. Ce serveur centralisé est par exemple un « tracker » dans le cadre d'un réseau Nₚ de type « pair-à-pair ». Dans un mode complètement distribués, les noeuds pairs peuvent être identifiés par des techniques d'échanges de pairs (« peer exchange » (PEX)), ou encore par un moteur de recherche.

Le client applicatif C peut alors transmettre, sous une forme de requête ou demande de service, cette liste au client ALTO C_{ALTO}. Ce client ALTO peut être colocalisé dans le terminal de communication T ainsi que la figure 2 le représente. Il peut aussi être localisé au sein de l'architecture de communication, par exemple au sein du serveur centralisé identifiant les noeuds du réseau Nₚ (tracker, etc...)

Le client ALTO est une entité fonctionnelle adaptée pour assurer l'interface entre un client applicatif et un serveur ALTO. Il met notamment en oeuvre les moyens logiciels permettant une communication avec ce serveur selon le protocole ALTO en cours de spécification par l'IETF. Il peut en outre comporter les moyens pour déterminer le ou les serveurs ALTO disponibles au sein de l'architecture de communication A à laquelle il est connecté ainsi que les services qu'ils assurent.

Le client ALTO C_{ALTO} transmet alors une demande de service à un serveur ALTO S. Le service demandé peut être le service « Endpoint Cost Service » défini au paragraphe 3.2.4 du document draft-ietf-alto-protocol-04.txt.

Ce service permet de traiter une liste de noeuds et d'utiliser la vue topologique de l'architecture de communication A dont dispose le serveur pour leur affecter un coût. Le serveur S peut répondre à la demande de service soit par la liste des noeuds et leur coût associé, soit par une liste ordonnée en fonction de ces coûts.

Par exemple, si le client a déterminé les noeuds N1, N3, N50 comme pouvant fournir l'application demandée, il va transmettre une requête au serveur S contenant les identifiants de ces trois noeuds et le serveur va déterminer soit des paires associant un coût à chaque noeud, soit une liste ordonnant ces trois noeuds selon ces coûts.

Ces caractéristiques résultent de la topologie du réseau ; la topologie comprenant des caractéristiques sur les connexions entre équipements (nombre de sauts IP, coût de chaque saut IP en valeur générique ou en kilomètres aériens, par exemple) et sur les noeuds applicatifs eux-mêmes (identité attribuée par le service ALTO, ressources disponibles, type de connectivité...).

Ces coûts peuvent prendre en compte différents critères reflétant la qualité des: bande-passante, délai de transmission, gigue, ressources encore disponibles sur le noeud etc. Ces caractéristiques peuvent être mesurés périodiquement et mises à jour au sein du serveur ALTO S. Ces processus sont toutefois hors du cadre de l'invention proprement dite.

Selon l'invention, le serveur ALTO S transmet les informations sur cet ensemble de noeuds à un dispositif de relai R. Ce dispositif de relai est une entité fonctionnelle qui peut être déployée de différentes façons par l'opérateur de l'architecture de communication A. Il peut s'agir d'une entité unique et centralisée, ou bien au contraire, il peut y avoir une pluralité de dispositifs de relai par exemple situés au niveau des équipements d'accès à l'architecture de communication A, côté client (« customer edge ») ou côté coeur de réseau (« provider edge »), ou encore à un degré intermédiaire de distribution au sein de l'architecture de communication A.

Dans tous les cas ce dispositif de relai est localisé au sein de l'architecture de communication A et sous le contrôle de son opérateur.

Le serveur S peut également renvoyer une réponse au client ALTO C_{ALTO} par souci de conformité avec les protocoles de communication utilisés. Sa réponse ne contient toutefois pas les informations relatives aux noeuds prenant en compte la topologie de l'architecture A. Celles-ci ne sont envoyées qu'au dispositif de relai R et, en tout cas, pas au dehors des dispositifs sous le contrôle de l'opérateur.

La réponse au client peut contenir des données sur le statut de sa demande afin qu'il sache si elle a abouti ou non. Également, elle peut contenir quelques données générales : en cas de réussite partielle, le nombre de noeuds qui ont pu être traités etc.

Alternativement, le serveur ALTO peut ne rien répondre mais le dispositif de relai R peut alors envoyer un message au client ALTO signifiant que sa demande de service a correctement été traitée ou non.

Le dispositif de relai R fournit les informations reçues du serveur ALTO à un dispositif de médiation M. De même que le dispositif de relai R, ce dispositif de médiation M est une entité fonctionnelle qui peut être centralisée ou répartie au sein de l'architecture de communication A, de préférence au niveau des équipements d'accès.

Il peut être prévu des équipements de traitement regroupant ensemble un dispositif de relai et un dispositif de médiation. Ces équipements peuvent être des équipements d'accès à l'architecture A (contrôlés par l'opérateur) ou bien être directement connectés à ces noeuds d'accès, ceci afin de minimiser le surcoût engendré par les échanges avec ces fonctions. Il peut toutefois être proposé de n'avoir qu'un unique équipement au sein de l'architecture A, ou tout du moins au sein d'une région de cette architecture.

Le dispositif de médiation a pour rôle d'établir la communication entre le client C et les noeuds du réseau N déterminés selon les informations fournies par le dispositif de relai.

Comme il a été expliqué précédemment, ces informations peuvent consister en une liste ordonnée ou en une association entre identifiant de noeuds et coût(s). Elles permettent au dispositif de médiation d'établir la communication avec certains des noeuds uniquement, en fonction de ces critères. De cette façon, les noeuds sélectionnés correspondent à la topologie de l'architecture A. Il peut s'agir des noeuds les plus proches au sens topologique ou géographique, ou avec lesquels la connexion est la plus rapide ou disposant des meilleurs caractéristiques de qualité de service etc.

Par ailleurs, le dispositif de médiation établit une communication avec le client C. D'un point de vue pratique, son rôle est alors de mettre les différents acteurs en contact indirect, afin que les flux de données puissent être transmis entre les noeuds sélectionnés et le client applicatif par l'intermédiaire du dispositif de médiation M.

Ainsi, par l'utilisation de dispositifs de relai et de médiation, les clients C ne peuvent pas avoir connaissance des informations relatives à la topologie de l'architecture A bien que celles-ci puissent être utilisées pour déterminer les meilleurs noeuds du réseau N auquel le client C doit se connecter.

Le dispositif de médiation M offre un moyen supplémentaire d'optimiser le mécanisme de transmission/livraison de données de la manière suivante. On a vu que M reçoit les données demandées par le client C et les transmet à ce client C. De cette manière, le dispositif de médiation M peut endosser le rôle de noeud applicatif faisant office de cache (lieu temporaire de stockage) pour ces données. Lors de demandes ultérieures pour ces mêmes données par des clients applicatifs associés au même dispositif de médiation M, ces données pourront être localisées et transmises de façon plus directe aux clients. En effet, M pourra être identifié comme noeud de stockage candidat par exemple par un procédé direct de recherche de cache privilégiant le dispositif de médiation M dans la mesure où il a été associé au client applicatif par l'intermédiaire du dispositif de relai R.

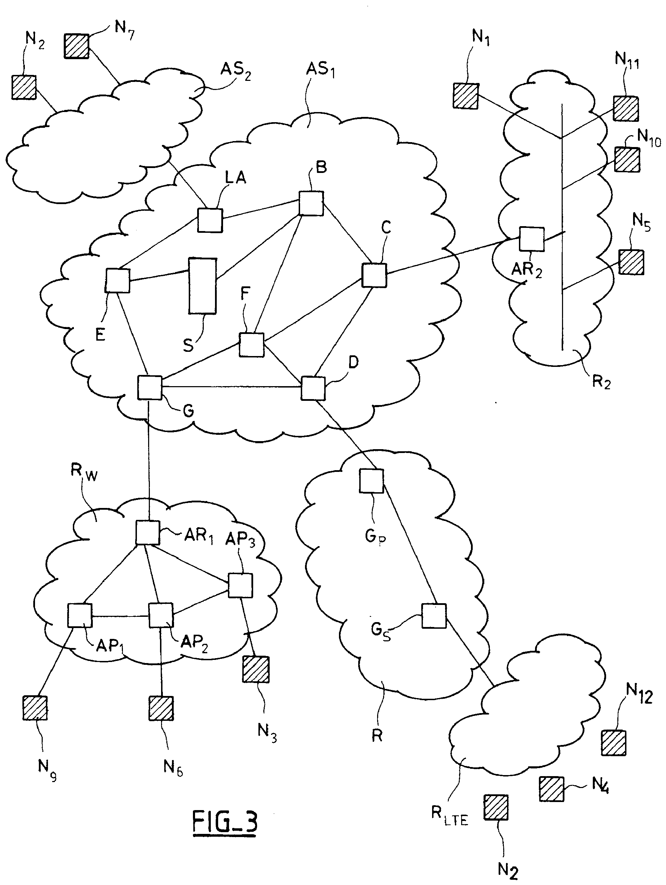

La figure 3 illustre une mise en oeuvre de l'invention.

L'architecture de communication représentée est composée de plusieurs réseaux de communication de natures différentes. Les références AS1 et AS2 représentent des systèmes autonomes du réseau Internet tels que définis par l'IETF. Seule l'architecture AS1 a été un peu détaillée par la représentation des équipements de réseaux A, B, C, D, E, F et G, puisque dans l'exemple de la figure 3, les serveurs ALTO sont ceux de AS1, et décrivent une topologie construite à partir de la vue de l'Internet qu'a l'opérateur de AS1.

L'architecture de communication AS1 possède un serveur ALTO S.

Un réseau WIFI ou WLAN est connecté via un routeur d'accès AR₁ à l'équipement de réseau D du système autonome AS1. Il comporte en outre des points d'accès AP₁, AP₂, AP₃.

Un réseau LTE (Long Term Evolution) R_{LTE} est connecté au système autonome AS₁ via un réseau tiers R qui comporte une passerelle G_{S} le connectant au réseau R_{LTE} et une passerelle G_{P} le connectant au système autonome AS_{1.}

Enfin, un réseau local Ethernet™ R_{L} est connecté au système autonome AS₁ par un routeur d'accès AR₂.

Le réseau de noeuds (applicatifs) est déployé au dessus de l'ensemble de l'architecture de communication. Il est composé de 12 noeuds N1 à N12.

Les noeuds N₂ et N₇ sont connectés au système autonome AS₂; les noeuds N₃, N₆, N₉ sont connectés au réseau WIFI R_{W} ; les noeuds N₄, N₈, N₁₂ sont connectés au réseau R_{LTE} et les noeuds N₁, N₅, N₁₀, N₁₁ sont connectés au réseau R_{L}.

Des dispositifs de médiation et de relai ont été intégrés dans les équipements situés près de l'accès des clients potentiels. Il peut s'agir de l'équipement d'accès ou d'une passerelle entre le réseau d'accès et le réseau de coeur. Dans l'exemple de déploiement de la figure 3, ces dispositifs ont été intégrés dans les routeurs d'accès AR₁ et AR₂ et dans les passerelles G_{P} et G_{S}. Selon la configuration du réseau de coeur et des réseaux d'accès contrôlés par l'opérateur, on peut aussi envisager le déploiement des relai à la frontière de l'Internet, côté opérateur (« provider edge »), c'est-à-dire parmi les routeurs A, B, C, D, E, F, G.

## Revendications

1. Système d'accès à une application répartie sur un réseau de noeuds déployé sur une architecture de communication (A), par un client (C) connecté à ladite architecture, comportant un serveur (S) conforme au standard ALTO, Application Layer Traffic Optimization, disposant de moyens pour fournir sur requête dudit client des informations sur un ensemble de noeuds dudit réseau (Np) prenant en compte la topologie dudit réseau au sein de ladite architecture de communication, et au moins un dispositif de relai (R) apte à recevoir et fournir lesdites informations ; **caractérisé en ce qu'**il comporte en outre au moins un dispositif de médiation (M) adapté à :
- sélectionner certains noeuds parmi les noeuds de cet ensemble, à partir desdites informations fournies par l'au moins un dispositif de relai (R),
- et établir des communications entre ledit client (C) et au moins les noeuds ainsi sélectionnés, via ce dispositif de médiation (M) sans que les noeuds sélectionnés aient connaissance desdites informations sur l'ensemble de noeuds dudit réseau.

2. Système d'accès selon la revendication précédente, comportant au moins un équipement de traitement mettant en oeuvre un desdits au moins dispositif de relai et un desdits dispositif de médiation.

3. Système d'accès selon l'une des revendications précédentes dans lequel ledit serveur est conforme aux spécifications ALTO.

4. Système d'accès selon la revendication précédente dans lequel ledit client transmet ladite requête audit serveur par l'intermédiaire d'un client conforme aux spécifications ALTO.

5. Système d'accès selon l'une des revendications précédentes, dans lequel lesdites informations forment une liste ordonnée d'identifiants de noeuds.

6. Système d'accès selon l'une des revendications selon l'une des revendications 1 à 5, dans lequel lesdites informations sont constituées d'associations entre identifiants de noeuds et coût(s).

7. Système d'accès selon l'une des revendications selon l'une des revendications précédentes dans lequel ledit dispositif de médiation (M) possède une fonction de cache pour les données transmises audit client applicatif (C).

8. Procédé d'accès à une application répartie sur un réseau de noeuds déployé sur une architecture de communication (A), par un client (C) connecté à ladite architecture, comportant une étape de transmission par ledit client d'une requête à un serveur (S) conforme au standard ALTO, Application Layer Traffic Optimization, qui fournit en réponse des informations sur un ensemble de noeuds dudit réseau (Np) prenant en compte la topologie dudit réseau au sein de ladite architecture de communication, dans lequel lesdites informations sont transmises à au moins un dispositif de relai (R); **caractérisé en ce qu'**il comporte en outre :
- une étape de sélection, par au moins un dispositif de médiation, de certains noeuds parmi les noeuds de cet ensemble, à partir desdites informations fournies par l'au moins un dispositif de relai (R),
- et une étape d'établissement de communications entre ledit client et les noeuds ainsi sélectionnés, via ce dispositif de médiation (M) sans que les noeuds sélectionnés aient connaissance desdites informations sur l'ensemble de noeuds dudit réseau.

9. Application logicielle comportant des moyens pour réaliser les étapes du procédé selon la revendication précédente, lorsqu'elle est mise en oeuvre par un ou plusieurs équipements de traitement de données.

## Patentansprüche

1. System für Zugang zu einer Anwendung, die über ein Netzwerk von Knoten verteilt ist, das über eine Kommunikationsarchitektur (A) durch einen mit der Architektur verbundenen Client (C) bereitgestellt wird, das einen ALTO (Application Layer Traffic Optimization)-konformen Server (S) aufweist,
mit Einrichtungen, um auf Aufforderung des Clients Daten über eine Anordnung von Knoten des Netzwerks (Np) zu liefern, wobei die Topologie des Netzwerks innerhalb der Kommunikationsarchitektur berücksichtigt wird, und mit mindestens einer Relaisvorrichtung (R), die dazu geeignet ist, die Daten zu empfangen und zu übertragen,
**dadurch gekennzeichnet,**
**dass** es außerdem mindestens eine Vermittlungsvorrichtung (M) aufweist, die dafür ausgelegt ist:
- bestimmte Knoten aus den Knoten dieser Anordnung anhand der durch die mindestens eine Relaisvorrichtung (R) gelieferten Daten auszuwählen, und
- die Kommunikation zwischen dem Client (C) und wenigstens den somit ausgewählten Knoten über diese Vermittlungsvorrichtung (M) zu erstellen, ohne dass die ausgewählten Knoten von den Daten über die Knotenanordnung des Netzwerks Kenntnis haben.

2. Zugangssystem nach dem vorhergehenden Anspruch,
das mindestens eine Verarbeitungseinrichtung aufweist, die eine der mindestens einen Relaisvorrichtungen und eine der Vermittlungsvorrichtungen einsetzt.

3. Zugangssystem nach einem der vorhergehenden Ansprüche,
bei dem der Server zu den ALTO-Spezifikationen konform ist.

4. Zugangssystem nach dem vorhergehenden Anspruch,
bei dem der Client dem Server die Aufforderung über einen zu den ALTO-Spezifikationen konformen Client überträgt.

5. Zugangssystem nach einem der vorhergehenden Ansprüche,
bei dem die Daten eine sortierte Liste von Knoten-Zugangsdaten bilden.

6. Zugangssystem nach einem der Ansprüche 1 bis 5,
bei dem die Daten aus Zuordnungen von Knoten-Zugangsdaten und Kosten bestehen.

7. Zugangssystem nach einem der vorhergehenden Ansprüche,
bei dem die Vermittlungsvorrichtung (M) eine Cache-Funktion für an den Anwendungsclient (C) übertragene Daten hat.

8. Verfahren für Zugang zu einer Anwendung, die über ein Knotennetzwerk verteilt ist, das über eine Kommunikationsarchitektur (A) durch einen mit dieser Architektur verbundenen Client (C) bereitgestellt wird, wobei es einen Verfahrensschritt zur Übertragung einer Aufforderung durch diesen Client an einen ALTO (Application Layer Traffic Optimization)-konformen Server (S) aufweist, der als Antwort Daten über eine Anordnung von Knoten des Netzwerks (Np) liefert, wobei die Topologie des Netzwerks innerhalb der Kommunikationsarchitektur berücksichtigt wird, bei dem die Daten an mindestens eine Relaisvorrichtung (R) übertragen werden,
**dadurch gekennzeichnet,**
**dass** es außerdem aufweist:
- einen Verfahrensschritt zur Auswahl durch mindestens eine Vermittlungsvorrichtung von bestimmten Knoten aus den Knoten dieser Anordnung anhand der Daten, die durch die mindestens eine Relaisvorrichtung (R) geliefert werden, und
- einen Verfahrensschritt zur Erstellung der Kommunikation zwischen dem Client und den somit ausgewählten Knoten über die Vermittlungsvorrichtung (M), ohne dass die ausgewählten Knoten von den Daten über die Knotenanordnung des Netzwerks Kenntnis haben.

9. Softwareanwendung, die Einrichtungen zur Ausführung der Verfahrensschritte nach dem vorhergehenden Anspruch aufweist, wenn sie durch eine oder mehrere Datenverarbeitungseinrichtungen eingesetzt wird.

## Claims

1. Access system for an application distributed over a network of nodes deployed on a communications architecture (A), by a client (C) connected to said architecture, comprising a server (S) conforming to the ALTO (Application Layer Traffic Optimization) standard, having means for supplying, upon a query by said client, information relating to a set of nodes of said network (Np) which take into account the topology of said network within said communications architecture, and at least one relay device (R) capable of receiving and supplying said information;
**characterized in that** it further comprises at least one mediation device (M) adapted to:
select certain nodes from the nodes of this set, using the information provided by the at least one relay (R); and
establish communications between said client (C) and at least one of the nodes thus selected via the mediation device (M), without the selected nodes being aware of the information relating to the set of nodes of said network.

2. Access system according to preceding claim 1, comprising at least one processing appliance implementing one of said at least one said relay and said at least one mediation device.

3. Access system according to any one of the preceding claims, wherein said server conforms to the ALTO specification.

4. Access system according to the preceding claim, wherein said client transmits said query to said server via the intermediary of a client that conforms to the ALTO specification.

5. Access system according to any one of the preceding claims, wherein said information forms a list of ordered node identifiers.

6. Access system according to any one of claims 1 to 5, wherein said information is made up of associations between node identifiers and cost(s).

7. Access system according to any one of the preceding claims, wherein said mediation device (M) possesses a cache function for data transmitted to said application client (C).

8. Access method for an application distributed over a network of nodes deployed on a communications architecture (A), by a client (C) connected to said architecture, comprising a transmission step by said client of a query to a server (S) conforming to the ALTO (Application Layer Traffic Optimization) standard, which in response to said query supplies information relating to a set of nodes of said network (Np) which take into account the topology of said network within said communications architecture, wherein said information is transmitted to at least one relay device (R);
**characterized in that** the method further comprises;
a selection step, via at least one mediation device, of certain nodes from this set of nodes, using the information supplied by the at least one relay device (R); and
a communications establishment step in which communications are established between said client and the thus selected nodes via the mediation device (M), without the selected nodes being aware of the information relating to the set of nodes of said network.

9. Software application comprising means for effecting the method steps of the preceding claim, when executed by one or more data processing appliances.
